(19) Europäisches Patentamt
European Patent Office
Office européen des brevets

(11) EP 4 159 812 A1

(12) # EUROPEAN PATENT APPLICATION
published in accordance with Art. 153(4) EPC

(43) Date of publication:
**05.04.2023 Bulletin 2023/14**

(21) Application number: **21816811.0**

(22) Date of filing: **27.05.2021**

(51) International Patent Classification (IPC):
***C08L 81/02*** $^{(2006.01)}$ ***C08K 3/26*** $^{(2006.01)}$

(52) Cooperative Patent Classification (CPC):
**C08K 3/26; C08L 81/02**

(86) International application number:
**PCT/JP2021/020109**

(87) International publication number:
**WO 2021/246268 (09.12.2021 Gazette 2021/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.06.2020 JP 2020096030**

(71) Applicant: **DIC Corporation**
**Tokyo 174-8520 (JP)**

(72) Inventors:
- **TSUKAKOSHI Yuto**
  **Ichihara-shi, Chiba 290-8585 (JP)**
- **ABE Fumiaki**
  **Ichihara-shi, Chiba 290-8585 (JP)**
- **NARA Saori**
  **Ichihara-shi, Chiba 290-8585 (JP)**
- **ASANO Kiichi**
  **Ichihara-shi, Chiba 290-8585 (JP)**

(74) Representative: **Gerauer, Marc Philippé**
**Kraus & Weisert**
**Patentanwälte PartGmbB**
**Thomas-Wimmer-Ring 15**
**80539 München (DE)**

(54) **POLYARYLENE SULFIDE RESIN COMPOSITION, MOLDED ARTICLE, AND METHODS FOR PRODUCING POLYARYLENE SULFIDE RESIN COMPOSITION AND MOLDED ARTICLE**

(57) Provided are a molded article containing a polyarylene sulfide resin and having excellent thermal conductivity in a surface direction and a thickness direction (depth direction) of the molded article, a polyarylene sulfide resin composition capable of providing the molded article, and methods for producing the molded article and the resin composition. More specifically, the present invention relates to a polyarylene sulfide resin composition formed by blending a polyarylene sulfide resin and magnesium carbonate having a circularity of less than 0.8 as essential components, a molded article formed by molding the polyarylene sulfide resin composition, and methods for producing the resin composition and the molded article.



Processed by Luminess, 75001 PARIS (FR)

## Description

### TECHNICAL FIELD

The present invention relates to a polyarylene sulfide resin composition, a molded article, and methods for producing the polyarylene sulfide resin composition and the molded article. More specifically, the invention relates to a polyarylene sulfide resin composition having excellent mechanical properties and excellent thermal conductivity, a molded article, and methods for producing the polyarylene sulfide resin composition and the molded article.

### BACKGROUND ART

In recent years, engineering plastics with excellent productivity, moldability, and high heat resistance have been developed, and they are widely used as parts for electric, electronic equipment, automobiles, etc. as materials to replace metal materials because they are lightweight. In particular, a polyarylene sulfide (hereinafter may be abbreviated as "PAS") resin represented by polyphenylene sulfide (hereinafter may be abbreviated as "PPS") resin has excellent heat resistance, and is also excellent in mechanical strength, chemical resistance, moldability, and dimensional stability. Taking advantage of these properties, the polyarylene sulfide resin is used as a material for an electric and/or electronic equipment part, an automobile part, etc.

In addition, in these fields such as electric and/or electronic equipment parts and automobile parts materials, the amount of heat generated is increasing along with the increase in output. Further improvement of the thermal conductivity of the material itself has become an urgent issue in order to improve the heat dissipation property.

Therefore, there has been known a molded article having a surface roughness Rz of 6 μm or less, which is formed by blending PPS resin with boron nitride and basic magnesium sulfate filler (inorganic short fibers with a fiber diameter of 0.5 to 1.0 μm), and there has been known a method for improving the heat dissipation property by bringing the surface of the molded article into close contact with a heat dissipation object (see, for example, Patent Literature 1). However, when the molded article is injection molded, heat is conducted along the direction of a filler that is oriented parallel to the surface of the molded article. Therefore, the heat conducted from the heat dissipating object to the surface of the molded article is only conducted in the lateral direction (surface direction) on the surface of the molded article. As a result, the thermal conductivity in a direction perpendicular to the surface of the molded article (also referred to as the thickness direction or depth direction) is insufficient, and there is not only room for improvement in the thermal conductivity, but also room for improvement in a TD direction (a direction perpendicular to the direction that the resin flows during melt-molding; hereinafter the same).

Therefore, there has been known a PAS resin composition formed by melt-kneading a PAS resin with whiskers having a large fiber diameter, that is, a single crystal having a needle-like structure, and a spherical filler as essential components (see Patent Literature 2). It has been known that a molded article thereof has excellent thermal conductivity not only in the surface direction of the molded article (orientation direction of filler such as whiskers), but also in the thickness direction (depth direction) with respect to the surface of the molded article as well as excellent mechanical strength in the TD direction. However, since the filler contained in the molded article has a needle-like structure, even if the thermal conductivity in the surface direction of the molded article is sufficiently improved, there is still room for improvement in the thermal conductivity in the thickness direction.

### CITATION LIST

### PATENT LITERATURE

PTL 1: JP-A-2014-234407
PTL2: JP-A-2018-053004
PTL 3: JP-A-2016-88984

### SUMMARY OF INVENTION

### TECHNICAL PROBLEM

Also known are a PPS resin composition, a molded article, and methods for producing the PPS resin composition and the molded article, which have excellent thermal conductivity and mechanical strength by using, as fillers, only a spherical filler without using a single crystal having a needle-like structure (see Patent Literature 3). However, the

inventors of the invention have found that although it was possible to improve both the thermal conductivity in the surface direction and the thermal conductivity in the thickness direction of the molded article, there is still room for improvement.

Therefore, a problem to be solved by the invention is to provide a molded article containing a polyarylene sulfide resin and having excellent thermal conductivity in the surface direction and the thickness direction (depth direction) of the molded article, a polyarylene sulfide resin composition capable of providing the molded article, and methods for producing the molded article and the resin composition.

SOLUTION TO PROBLEM

As a result of intensive studies made by the inventors of the invention to solve the above problem, the inventors have found that a PAS resin composition formed by blending a PAS resin and magnesium carbonate in an unsteady shape as essential components can solve the above problem, and have completed the invention.

That is, the invention relates to a PAS resin composition formed by blending a PAS resin and magnesium carbonate having a circularity of less than 0.8 as essential components.

The invention also relates to a molded article formed by molding the PAS resin composition.

Further, the invention relates to a method for producing a PAS resin composition including a step of blending a PAS resin and magnesium carbonate having a circularity of less than 0.8 as essential components and melt-kneading the PAS resin and the magnesium carbonate in a temperature range equal to or higher than the melting point of the PAS resin.

ADVANTAGEOUS EFFECTS OF INVENTION

According to the invention, it is possible to provide a molded article containing a PAS resin and having excellent thermal conductivity in the surface direction and the thickness direction (depth direction) of the molded article, a PAS resin composition capable of providing the molded article, and methods for producing the molded article and the resin composition.

DESCRIPTION OF EMBODIMENTS

The PAS resin composition of the invention is characterized in that it is formed by blending a PAS resin and magnesium carbonate having a circularity of less than 0.8 as essential components.

The PAS resin composition of the invention contains a PAS resin as an essential component. The PAS resin has a resin structure having, as a repeating unit, a structure in which an aromatic ring and a sulfur atom are bonded to each other. To be specific, the PAS resin is a resin that includes, as a repeating unit, a structural moiety represented by the following general formula (1)

[Chem. 1]

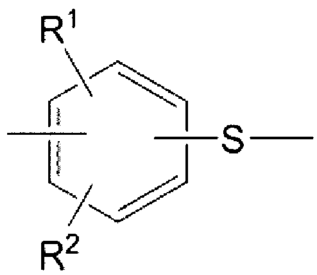

Formula (1)

(In the formula, $R^1$ and $R^2$ each independently represent a hydrogen atom, an alkyl group having 1 to 4 carbon atoms, a nitro group, an amino group, a phenyl group, a methoxy group, or an ethoxy group.), and, as necessary, a trifunctional structural moiety represented by the following general formula (2).

[Chem. 2]

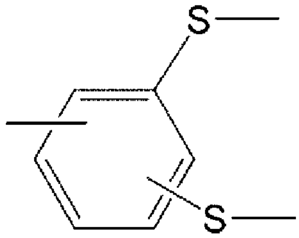

Formula (2)

The trifunctional structural moiety represented by Formula (2) is preferably in a range of 0.001 to 3 mol%, and particularly preferably in a range of 0.01 to 1 mol%, with respect to a total number of moles of the trifunctional structural moiety and other structural moieties.

Here, the structural moieties represented by the general formula (1), especially $R^1$ and $R^2$ in Formula (1) are preferably hydrogen atoms from the viewpoint of the mechanical strength of the PAS resin. In such a case, examples thereof include those formed by bonding at a para position represented by the following formula (3) and those formed by bonding at a meta position represented by the following formula (4).

[Chem. 3]

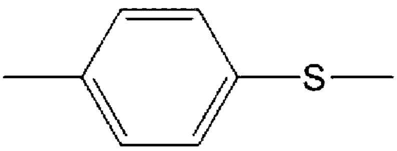

Formula (3)

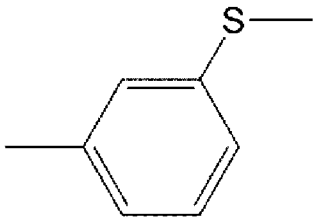

Formula (4)

Among these, particularly, a structure in which the sulfur atom is bonded to the aromatic ring in the repeating unit at a para position represented by the general formula (3) is preferable from the viewpoint of heat resistance and crystallinity of the PAS resin.

In addition, the PAS resin may contain not only the structural moieties represented by the general formulae (1) and (2), but also structural moieties represented by the following structural formulae (5) to (8)

[Chem. 4]

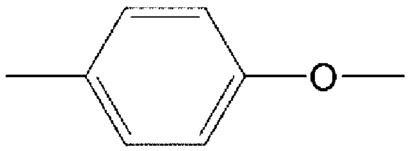

Formula (5)

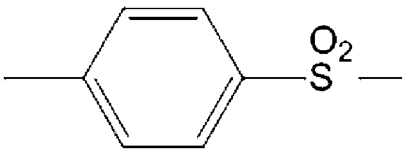

Formula (6)

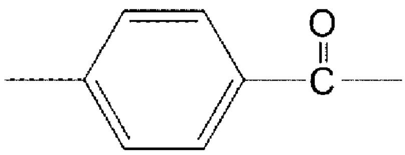

Formula (7)

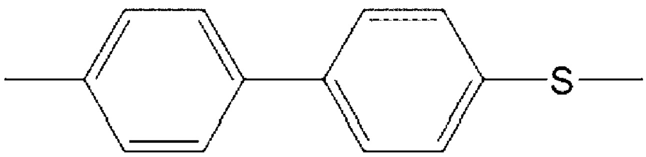

Formula (8)

such that the amount of the structural moieties represented by the structural formulae (5) to (8) is 30 mol% or less of a total of the structural moieties represented by the structural formulae (5) to (8) and the structural moieties represented by the general formulae (1) and (2). In particular, in the invention, it is preferable that the structural moieties represented by the general formulae (5) to (8) are 10 mol% or less from the viewpoint of heat resistance and mechanical strength of the PAS resin. When the PAS resin contains the structural moieties represented by the general formulae (5) to (8), the bonding thereof may take a form of a random copolymer or a block copolymer.

Moreover, the PAS resin may have, in its molecular structure, a naphthyl sulfide bond or the like, and the amount thereof is preferably 3 mol% or less, particularly preferably 1 mol% or less, with respect to a total number of moles of the naphthyl sulfide bond and other structural moieties.

In addition, the physical properties of the PAS resin are as follows, although they are not particularly limited as long as the effects of the invention are not impaired.

(Melt Viscosity)

The melt viscosity of the PAS resin used in the invention is not particularly limited. However, the melt viscosity (V6) measured at 300°C is preferably in a range of 2 Pa s or more, preferably in a range of 1000 Pa·s or less, more preferably in a range of 500 Pa·s or less, further more preferably in a range of 200 Pa·s or less from the viewpoints of good balance of flowability and mechanical strength. The melt viscosity (V6) is a value obtained by measuring the melt viscosity of a PAS resin with a flow tester, CFT-500D manufactured by Shimadzu Corporation after the resin was retained for 6 minutes at a temperature of 300°C, a load of $1.96\times10^6$ Pa and with L/D=10 (mm)/1 (mm).

(Non-Newton Index)

The non-Newton index of the PAS resin used in the invention is not particularly limited; however, the non-Newton index is preferably in a range of 0.90 to 2.00. When a linear PAS resin is used, the non-Newton index is preferably in a range of 0.90 or more, more preferably in a range of 0.95 or more, and preferably in a range of 1.50 or less, more preferably in a range of 1.20 or less. Such a PAS resin has excellent mechanical properties, flowability, and wear resistance. In the invention, the non-Newton index (N value) is a value calculated from the following equation from shear rate (SR) and shear stress (SS) measured with a capilograph at a temperature of melting point + 20°C and an orifice

length (L)/orifice diameter (D) ratio, that is, L/D, of 40. The closer the non-Newton index (N value) is to 1, the more linear the structure, and the higher the non-Newton index (N value), the more branched the structure.

[Math. 1]

$$SR = K \cdot SS^{N}$$

[where SR represents shear rate ($sec^{-1}$), SS represents shear stress ($dyne/cm^2$), and K represents a constant.]

(Production Method)

The method for producing the PAS resin is not particularly limited. However, examples thereof include (production method 1) a method of polymerizing a dihalogeno aromatic compound, as necessary, with the addition of a polyhalogeno aromatic compound or other copolymerization components, in the presence of sulfur and sodium carbonate; (production method 2) a method of polymerizing a dihalogeno aromatic compound, as necessary, with the addition of a polyhalogeno aromatic compound or other copolymerization components, in the presence of a sulfidizing agent or the like in a polar solvent; and (production method 3) a method of self-condensing p-chlorothiophenol, as necessary, with the addition of other copolymerization components. Among these methods, the (production method 2) is widely used and preferable. During the reaction, an alkali metal salt of a carboxylic acid or a sulfonic acid, or an alkali hydroxide may be added to adjust a polymerization degree. In particular, a product obtained by any of the following methods of the (production method 2) above is preferable: a method for producing a polyarylene sulfide resin in which a hydrogenated sulfidizing agent is introduced into a mixture containing a heated organic polar solvent and a dihalogeno aromatic compound at a rate at which water can be removed from the reaction mixture so as to allow the dihalogeno aromatic compound to react with the sulfidizing agent in the organic polar solvent, as necessary, with the addition of a polyhalogeno aromatic compound, and the water content in the reaction system is controlled within a range of 0.02 mol to 0.5 mol with respect to 1 mole of the organic polar solvent (see JP-A-07-228699); and a method of reacting a dihalogeno aromatic compound with an alkali metal hydrosulfide and an organic acid alkali metal salt in the presence of a solid alkali metal sulfide and an aprotic polar organic solvent, as necessary, with the addition of a polyhalogeno aromatic compound or other copolymerization components while controlling the amount of the organic acid alkali metal salt to be in a range of 0.01 to 0.9 mol with respect to 1 mole of the sulfur source and controlling the water content in the reaction system to be 0.02 mol or less with respect to 1 mole of the aprotic polar organic solvent (see WO2010/058713 pamphlet). Specific examples of the dihalogeno aromatic compound include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenylsulfone, 4,4'-dihalodiphenyl sulfoxide, 4,4'-dihalodiphenyl sulfide, and a compound having an alkyl group having 1 to 18 carbon atoms on the aromatic ring of each of the above compounds. Examples of the polyhalogeno aromatic compound include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. In addition, the halogen atom contained in each of the above compounds is desirably a chlorine atom or a bromine atom.

The method for post-treating the reaction mixture containing the polyarylene sulfide resin obtained by the polymerization process is not particularly limited. However, examples thereof include (post-treatment1) a method including: first distilling away the solvent from the reaction mixture under reduced pressure or ordinary pressure after addition or no addition of an acid or a base after the completion of the polymerization reaction, then rinsing the solids after the distillation of the solvent with a solvent such as water, a reaction solvent (or an organic solvent having a solubility comparable to that of a low-molecular polymer), acetone, methyl ethyl ketone, and alcohols one or more times, further neutralizing, water washing, filtering, and drying; (post-treatment 2) a method including: precipitating solid products of polyarylene sulfide, mineral salt and the like by adding, as a precipitation agent, a solvent (which is soluble in the used polymerization solvent, and is a poor solvent with respect to at least the polyarylene sulfide) such as water, acetone, methyl ethyl ketone, alcohols, ethers, halogenated hydrocarbon, aromatic hydrocarbon, and aliphatic hydrocarbon to the reaction mixture after the completion of the polymerization reaction, filtering, rinsing, and drying; (post-treatment 3) a method including: adding a reaction solvent (or an organic solvent having a solubility comparable to that of a low-molecular polymer) to the reaction mixture after the completion of the polymerization reaction, followed by stirring, filtering to remove the low-molecular-weight polymer, then performing rinsing with a solvent such as water, acetone, methyl ethyl ketone, and alcohols one or more times, then neutralizing, water washing, filtering, and drying; (post-treatment 4) a method including: water washing by adding water to the reaction mixture after the completion of the polymerization reaction, filtering, performing an acid treatment by adding an acid during the water washing as necessary, and drying; and (5) a method including: filtering the reaction mixture after the completion of the polymerization reaction, performing

rinsing with a reaction solvent one or more times as necessary, further water washing, filtering, and drying.

In the post-treatment methods exemplified in (post-treatment 1) to (post-treatment 5) above, the polyarylene sulfide resin may be dried in vacuum, air, or an inert gas atmosphere such as nitrogen.

The PAS resin composition of the invention is formed by blending magnesium carbonate having a circularity of less than 0.8 as an essential component. The magnesium carbonate used in the invention may be any of basic magnesium carbonate, neutral magnesium carbonate, magnesium hydroxycarbonate, and anhydrous magnesium carbonate; however, anhydrous magnesium carbonate is preferably used. The magnesium carbonate used in the invention may be magnesite containing magnesium carbonate as a main component. For example, a high-purity magnesite powder having a magnesium carbonate content of preferably 90% by mass or more, more preferably 98% by mass or more, and preferably 100% by mass or less, more preferably 99.999% by mass or less, can be mentioned. As the high-purity magnesite powder, there are synthetic products and natural products, and of these, natural products are preferable.

From the viewpoint of excellent thermal conductivity in the surface direction and the thickness direction (depth direction) with respect to the surface of the molded article, the magnesium carbonate used in the invention preferably has an anisotropic shape, and the numerical average circularity thereof is in a range of less than 0.8, preferably in a range of 0.75 or less, more preferably in a range of 0.70 or less. Although the lower limit of the circularity is not particularly limited, it is preferably in a range of 0.50 or more, more preferably in a range of 0.60 or more, from the viewpoint of excellent mechanical strength.

The "circularity" referred to in the invention is a parameter calculated by the following equation (1).

[Math. 2]

$$\text{Circularity (R)} = 4\pi S/L^2 \qquad (1)$$

In the above equation, S and L respectively represent a measured value (S) and a perimeter (L) of a two-dimensional projected area of magnesium carbonate measured using image processing software (using automatic area measurement attached to a digital microscope VHX-6000 manufactured by Keyence Corporation) after photographing a projected image of the magnesium carbonate at a magnification (200 times) with a microscope (Microscope VHX-6000 manufactured by Keyence Corporation). In addition, the circularity referred to in the invention is a numerical average value of values calculated from the measurement results of the above-mentioned projected area (S) and peripheral length (L) of 50 to 100 magnesium carbonates photographed in one projected image. The circularity (R) is greater than 0 and equal to or less than 1 ($0<R\leq 1$), and when the magnesium carbonate is a spherical shape and the projected image is a perfect circle, the circularity (R) is 1.

The range of the average particle size ($D_{50}$) of the magnesium carbonate used in the invention is not particularly limited; however, from the viewpoint of excellent mechanical strength and flowability, the upper limit thereof is preferably 45 μm, more preferably 30 μm, further more preferably 25 μm, and particularly preferably 20 μm. On the other hand, from the viewpoint of excellent mechanical strength and thermal conductivity, the lower limit thereof is preferably 1 μm, more preferably 5 μm, and further more preferably 11 μm. The average particle size is an average particle size ($D_{50}$) obtained based on a particle size distribution measured according to a conventional method using a laser diffraction/scattering particle size distribution measuring machine (Microtrac MT3300EXII).

The maximum particle size of the magnesium carbonate used in the invention is not particularly limited; however, it is preferably 300 μm or less, more preferably 297 μm or less, further more preferably 125 μm, and particularly preferably 100 μm or less, from the viewpoint of excellent mechanical strength, flowability, and surface appearance. The maximum particle size may be a value based on sieving using a filter having a specific mesh size.

The magnesium carbonate used in the invention can be subjected to surface treatment, and specific examples thereof include epoxy compounds, isocyanate compounds, silane compounds, titanate compounds, borane treatment, and ceramic coating. Among them, the epoxy compounds and silane compounds are preferable.

In the PAS resin composition of the invention, the range of the blending ration of the magnesium carbonate is not particularly limited; however, from the viewpoint of excellent thermal conductivity in the thickness direction of the surface of the molded article, the lower limit thereof is preferably 20 parts by mass, more preferably 50 parts by mass, and further more preferably 100 parts by mass, with respect of 100 parts by mass of a PAS resin. On the other hand, from the viewpoint of excellent mechanical strength and smoothness of the surface of the molded article, the upper limit thereof is preferably 400 parts by mass, more preferably 350 parts by mass, further more preferably 300 parts by mass, and particularly preferably 250 parts by mass, with respect to 100 parts by mass of the PAS resin.

The PAS resin composition of the invention may contain, as necessary, a filler as an optional component. Any known conventional materials may be used as these fillers as long as they do not impair the effects of the invention. For example, fillers having various shapes, such as fibrous materials and non-fibrous materials such as grainy materials and tabular materials, may be used. Specifically, fibrous fillers such as glass fibers, carbon fibers, silane-glass fibers, ceramic fibers, aramid fibers, metal fibers, potassium titanate fibers, silicon carbide fibers, calcium silicate fibers, wollastonite, and natural fibers may be used. Further, non-fibrous fillers such as glass beads, glass flakes, barium sulfate, clay, pyrophyllite, bentonite, sericite, mica, mica, talc, attapulgite, ferrite, calcium silicate, calcium carbonate, glass beads, zeolite, milled fiber, and calcium sulfate may be used.

The fillers are not essential components in the invention, and when blended, the content of the fillers is not particularly limited as long as the effects of the invention are not impaired. For example, the content of the fillers blended is, with respect to 100 parts by mass of the PAS resin, preferably 1 part by mass or more, more preferably 10 parts by mass or more, and preferably 600 parts by mass or less, and more preferably 200 parts by mass or less. In such ranges, the resin composition has good mechanical strength and moldability and thus is preferable.

The PAS resin composition of the invention may contain, as necessary, a silane coupling agent as an optional component. The PAS resin silane coupling agent of the invention is not particularly limited as long as the effects of the invention are not impaired. However, a silane coupling agent having a functional group, for example, an epoxy group, an isocyanato group, an amino group, or a hydroxyl group, which reacts with a carboxyl group, is preferable. Examples of such a silane coupling agent include epoxy-group-containing alkoxysilane compounds such as γ-glycidoxypropyltrimethoxysilane, γ-glycidoxypropyltriethoxysilane, and β-(3,4-epoxycyclohexyl)ethyltrimethoxysilane, isocyanato-group-containing alkoxysilane compounds such as γ-isocyanatopropyltrimethoxysilane, γ-isocyanatopropyltriethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, and γ-isocyanatopropyltrichlorosilane, amino-group-containing alkoxysilane compounds such as γ-(2-aminoethyl)aminopropylmethyldimethoxysilane, γ-(2-aminoethyl)aminopropyltrimethoxysilane, and γ-aminopropyltrimethoxysilane, hydroxyl-group-containing alkoxysilane compounds such as γ-hydroxypropyltrimethoxysilane and γ-hydroxypropyltriethoxysilane. Although the silane coupling agent is not an essential component in the invention, when the silane coupling agent is blended, the blending amount thereof is not particularly limited as long as the effects of the invention are not impaired. However, the amount of the coupling agent is preferably 0.01 parts by mass or more, more preferably 0.1 parts by mass or more, and preferably 10 parts by mass or less, and more preferably 5 parts by mass or less with respect to 100 parts by mass of the PAS resin. In such ranges, the resin composition is preferable because it has good corona resistance and moldability, particularly mold releasability, and the molded article shows improved mechanical strength while exhibiting excellent adhesiveness to an epoxy resin.

The PAS resin composition of the invention may contain, as necessary, a thermoplastic elastomer as an optional component. Examples of the thermoplastic elastomer include polyolefin-based elastomers, fluoroelastomers, and silicone-based elastomers, and among them, polyolefin-based elastomers are preferable. When these elastomers are added, the blending amount thereof is not particularly limited as long as the effects of the invention are not impaired. However, the blending amount is preferably 0.01 parts by mass or more, more preferably 0.1 parts by mass or more, and preferably 10 parts by mass or less, and more preferably 5 parts by mass or less with respect to 100 parts by mass of the PAS resin (A). In such ranges, the obtained PAS resin composition is preferable because the impact resistance of the PAS resin composition is improved.

Examples of the aforementioned polyolefin-based elastomer include a homopolymer of α-olefin, a copolymer of two or more α-olefins, and a copolymer of one or more α-olefins and a vinyl polymerizable compound having a functional group. In this case, examples of the α-olefin include α-olefins having 2 to 8 carbon atoms such as ethylene, propylene, and 1-butene. Further, examples of the functional group include a carboxyl group, an acid anhydride group (-C(=O)OC(=O)-), an epoxy group, an amino group, a hydroxyl group, a mercapto group, an isocyanate group, and an oxazoline group. Examples of the vinyl polymerizable compound having a functional group include one or more of vinyl acetate; α,β-unsaturated carboxylic acid such as (meth)acrylic acid; an alkyl ester of α,β-unsaturated carboxylic acid such as methyl acrylate, ethyl acrylate and butyl acrylate; a metal salt of α,β-unsaturated carboxylic acid such as an ionomer (as metals, alkali metals such as sodium, alkaline earth metals such as calcium, zinc, etc.); a glycidyl ester of α,β-unsaturated carboxylic acid such as glycidyl methacrylate; α,β-unsaturated dicarboxylic acid such as a maleic acid, a fumaric acid, and an itaconic acid; and derivatives of the α,β-unsaturated dicarboxylic acid (monoesters, diesters, and acid anhydrides). The above thermoplastic elastomers may be used alone or in combination of two or more.

Further, the PAS resin composition of the invention may contain, in addition to the above components, as appropriate according to the usage, a synthetic resin as an optional component. Examples of the synthetic resin (hereinafter simply referred to as synthetic resin) include a polyester resin, a polyamide resin, a polyimide resin, a polyetherimide resin, a polycarbonate resin, a polyphenylene ether resin, a polysulfone resin, a polyethersulfone resin, a polyether ether ketone resin, a polyether ketone resin, a polyarylene resin, a polyethylene resin, a polypropylene resin, a polyethylene tetrafluoride resin, a polyethylene difluoride resin, a polystyrene resin, an ABS resin, a phenol resin, a urethane resin, and a liquid crystal polymer. The synthetic resin is not an essential component in the invention; however, when blended, the blending ratio thereof is not particularly limited as long as the effects of the present invention are not impaired. In addition, the blending ratio of these resins differs depending on respective purposes and cannot be unconditionally specified. However, the ratio of the synthetic resin blended in the resin composition according to the invention may be, for example, in a range of 5 parts by mass or more and 15 parts by mass or less with respect to 100 parts by mass of the PAS resin. In other words, the ratio of the PAS resin to the total of the PAS resin (A) and the synthetic resin is

preferably in a range of (100/115) or more, more preferably in a range of (100/105) or more on a mass basis.

Moreover, the PAS resin composition of the invention may further contain, as necessary, a known conventional additive as an optional component. Examples of the known conventional additive include a colorant, an antistatic agent, an antioxidant, a heat resistance stabilizer, a UV stabilizer, a UV absorber, a foaming agent, a flame retardant, a flame retardant promoter, an anti-rust agent, and a coupling agent. These additives are not essential components, and may be used in an amount appropriately adjusted within a range of preferably 0.01 parts by mass or more, and preferably 1000 parts by mass or less with respect to 100 parts by mass of the PAS resin, according to purposes or usages as long as the effects of the invention are not impaired.

The method for producing the PAS resin composition of the invention includes a step of blending a PAS resin and magnesium carbonate having a circularity of less than 0.8 as essential components and melt-kneading the PAS resin and the magnesium carbonate in a temperature range equal to or higher than the melting point of the PAS resin. Details will be described below.

The PAS resin composition of the invention contains each essential component and, as necessary, other optional components. The method for producing the resin composition used in the invention is not particularly limited; however, examples thereof include a method of blending essential components and optionally optional components as necessary and melt-kneading the same, more specifically, a method of homogeneously dry-mixing with a tumbler, a Henschel mixer, or the like as necessary, and then introducing the mixture into a twin-screw extruder for melt-kneading.

The melt-kneading may be performed in a temperature range in which the resin temperature is equal to or higher than the melting point of the PAS resin, preferably in a temperature range equal to or higher than the melting point + 10°C, more preferably performed by heating to a temperature in a range of equal to or higher than the melting point + 10°C, further more preferably in a range of equal to or higher than the melting point + 20°C, and preferably in a range equal to or lower than the melting point + 100°C, more preferably in a range equal to or lower than the melting point + 50°C.

The melt kneader is preferably a twin-screw kneading extruder from the viewpoint of dispersibility and productivity. For example, it is preferable to melt-knead while appropriately adjusting a discharge rate of the resin component in a range of 5 (kg/hr) to 500 (kg/hr) and a screw rotation speed in a range of 50 (rpm) to 500 (rpm), and it is more preferable to melt-knead under a condition that the ratio thereof (discharge rate/screw rotation speed) is in a range of 0.02 (kg/hr/rpm) to 5 (kg/hr/rpm). In addition, the components may be added to and mixed in the melt kneader at the same time or separately. For example, when an additive is added among the aforementioned components, it is preferable to put the additive into the extruder from a side feeder of the twin-screw kneading extruder from the viewpoint of dispersibility. As to the position of the side feeder, the ratio of the distance from a resin input portion (top feeder) of the extruder to the side feeder to the total screw length of the twin-screw kneading extruder is preferably 0.1 or more, more preferably 0.3 or more, and preferably 0.9 or less, more preferably 0.7 or less.

The PAS resin composition according to the invention obtained by melt-kneading in this way is a melt mixture containing the essential components, as well as optional components which are added as needed and components derived therefrom. It is preferable that, after the melt-kneading, the resin composition in a molten state is extruded into a strand, followed by being processed into pellets, chips, granules, powder, etc. by a known method, for example, then pre-dried at a temperature of 100°C to 150°C as needed.

The molded article of the invention is formed by molding the PAS resin composition. Moreover, the method for producing the molded article of the invention includes a step of melt-molding the PAS resin composition. Details will be described below

The PAS resin composition of the invention may be subjected to various molding methods such as injection molding, compression molding, extrusion molding involving forming composites, sheets, and pipes, pultrusion, blow-molding, and transfer-molding. However, it is particularly suitable for injection molding usage since it has an excellent mold releasing property. In the case of molding by injection molding, the molding conditions are not particularly limited and molding can usually be performed by a general method. For example, in an injection molding machine, the PAS resin composition may be subjected to a melting step where the resin temperature is set to be equal to or higher than the melting point of the PAS resin, preferably equal to or higher than the melting point + 10°C, more preferably from the melting point + 10°C to the melting point + 100°C, further more preferably from the melting point + 20°C to the melting point + 50°C, and then be injected into a mold from a resin discharge port for molding. In this case, the mold temperature may also be set in a known temperature range, for example, room temperature (23°C) to 300°C, preferably 120°C to 180°C.

The molded article formed by molding the PAS resin composition of the invention exhibits excellent thermal conductivity in both the surface direction and the thickness direction with respect to the surface of the molded article, and also has excellent properties inherent to the PAS resin, particularly excellent mechanical strength. For this reason, it can be suitably used as a member for various products that require heat dissipation or thermal conductivity. The thermal conductivity of the molded article obtained by molding the PAS resin composition of the invention is not particularly limited. However, the thermal conductivity in the surface direction of the molded article (measured by a hot disk method)

is, for example, preferably 0.65 [W/m K] or more, more preferably 0.69 [W/m·K] or more, still more preferably 0.70 [W/m K] or more, and the thermal conductivity in the thickness direction (measured by a xenon flash method) may be preferably 0.65 [W/m·K] or more, more preferably 0.67 [W/m K] or more, and still more preferably 0.69 [W/m K] or more. Regarding the thermal conductivity in the surface direction of the molded article, the upper limit is not specified; however, the range may be, for example, 1.5 [W/m K] or less, preferably 1.2 [W/m K] or less. Also, regarding the thermal conductivity in the thickness direction, although the upper limit is not specified, the range may be, for example, 1.5 [W/m K] or less, preferably 1.2 [W/m K] or less.

Regarding the application of the molded article, it is not particularly limited, and the molded article can be used as various products. In particular, it is preferably used as a heat-dissipating member or heat-conducting member that exhibits high heat-dissipating properties with respect to a heat source, and can be used as a composite molded article joined with a heat-generating member or a heat-dissipating member, or as a molded article of a PAS resin alone. The heat-generating member to be joined with the PAS resin composition of the invention may be an electronic circuit, various other heat-generating components, or a component composed of a heat-dissipating member such as a metal such as aluminum die-cast. Examples of a method for joining the composite molded article joined to the heat-generating member include insert injection molding, vibration welding, infrared welding, electromagnetic induction heating, and a joining method combining these methods.

Examples of products of the molded article and composite molded article of the PAS resin composition of the invention include heat dissipating members for automobile engine control units or motors, heat dissipating members for LED substrates, and heat sinks for various electric and/or electronic device substrates. Moreover, the molded article of the invention can also be used as, in addition to the heat dissipating member, a general resin molded article as described below. For example, it can be used as electric and/or electronic parts typified by protective and/or supporting members for box-type electric and electronic component integrated modules, multiple individual semiconductors or modules, sensors, LED lamps, connectors, sockets, resistors, relay cases, switches, coil bobbins, capacitors, variable capacitor cases, optical pickups, oscillators, various terminal boards, transformers, plugs, printed circuit boards, tuners, speakers, microphones, headphones, small motors, magnetic head bases, power modules, terminal blocks, semiconductors, liquid crystals, FDD carriages, FDD chasses, motor brush holders, parabolic antennas, and computer-related parts; VTR parts, television parts, irons, hair dryers, rice cooker parts, microwave oven parts, acoustic parts, audio and/or video equipment parts such as audio laser disks, compact disks, DVD disks, and Blu-ray disks, home and office electric appliance parts such as lighting parts, refrigerator parts, air-conditioner parts, typewriter parts, word-processor parts, and water-related equipment parts of water heaters, bath water volume, temperature sensors, etc.; machine-related parts such as office computer-related parts, phone-related parts, facsimile-related parts, copier-related parts, cleaning jigs, motor parts, lighters, and typewriters; optical instrument and precision instrument-related parts such as microscopes, binoculars, cameras, and watches; and automobile and vehicle-related parts such as alternator terminals, alternator connectors, brush holders, slip rings, IC regulators, potentiometer bases for light dimmers, relay blocks, inhibitor switches, various valves such as exhaust gas valves, various fuel-related, exhaust-system, and intake-system pipes, air intake nozzle snorkels, intake manifolds, fuel pumps, engine coolant joints, carburetor main bodies, carburetor spacers, exhaust gas sensors, coolant sensors, oil temperature sensors, brake pad wear sensors, throttle position sensors, crankshaft position sensors, airflow meters, brake pad wear sensors, air-conditioner thermostat bases, heater hot air flow control valves, brush holders for radiator motors, water-pump impellers, turbine vanes, wiper motor-related parts, distributors, starter switches, ignition coils and bobbins thereof, motor insulators, motor rotors, motor cores, starter relays, wire harnesses for transmission, window washer nozzles, air-conditioning panel switch boards, coils for fuel-related electromagnetic valves, connectors for fuses, horn terminals, insulating plates for electric parts, step motor rotors, lamp sockets, lamp reflectors, lamp housings, brake pistons, solenoid bobbins, engine oil filters, and ignition device cases. The molded article of the invention can also be applied to various other uses.

## Examples

The invention will be described below with Examples and Comparative Examples. However, the invention is not limited to these Examples. Unless otherwise specified, "%" and "parts" are based on mass.

### <Measurement of MD/TD Bending Strength>

A test piece was prepared by cutting out an ISO TYPE-A dumbbell with a width of 25 mm for evaluation of a flow direction (MD) from an ISO D2 sheet for evaluation of a direction perpendicular to the flow direction (TD), and was used for the measurement test. It was prepared by injecting a resin from one end of the dumbbell piece or a single gate of the ISO D2 sheet so as to form a test piece that did not include a weld portion.

Bending strength was measured for test pieces made of the compositions obtained in Examples and Comparative Examples according to a measurement method of ISO 178 "Plastics - Determination of Bending Properties".

<Measurement of Thermal Conductivity (Xenon Flash Method, Hot Disk Method)>

A flat plate having a length and width of 10 mm and a thickness of 2 mm was prepared as a test piece for each Example and Comparative Example and used for the test. In the table, "surface" means the surface direction of a molded article during injection molding, and "depth" means the direction (thickness direction) perpendicular to the resin flow direction during injection molding of the molded article. The thermal conductivity was measured in the surface direction of the molded article in accordance with JIS R 1611 "Method for measuring thermal diffusivity, specific heat capacity and thermal conductivity of fine ceramics by flash method". In addition, the ISO D2 sheet (60 mm × 60 mm × thickness 2 mm) was used as a test piece to measure in the depth direction of the molded article according to ISO22007-2.

<Melt Viscosity>

In the Examples, the V6 melt viscosity of the polyarylene sulfide resin is a value obtained by measuring the melt viscosity (V6) at a temperature of 300°C using a flow tester "CFT-500D" manufactured by Shimadzu Corporation after the resin was retained for 6 minutes at a temperature of 300°C, a load of $1.96 \times 10^6$ Pa and with L/D=10 (mm)/1 (mm).

<Measurement of Particle Size of Magnesium Carbonate>

The measurement was performed by a method according to a laser diffraction/scattering method (JIS Z8825), and the number average particle size of each sample was calculated.

<Examples 1 to 3 and Comparative Example 1>

Each material was blended according to the compositional components and blending amounts shown in Table 1. Thereafter, these blended materials were put into a vented twin-screw extruder "TEX-30 (product name)" manufactured by Japan Steel Works, Ltd., and melt-kneaded at a resin component discharge rate of 25 kg/hr, a screw rotation speed of 200 rpm, and a set resin temperature of 330°C to obtain pellets of the resin composition. Glass fiber was fed from the side feeder, and the other materials were uniformly mixed in a tumbler in advance and fed from the top feeder. After drying the obtained pellets of the resin composition in a gear oven at 140°C for 2 hours, the pellets were prepared into various test pieces by injection molding, and the following tests were performed. Each test result is shown in Table 1.

[Table 1]

| | | Example 1 | Example 2 | Example 3 | Comparative Example 1 |
|---|---|---|---|---|---|
| A1 | wt% | 39.60 | 39.60 | 39.60 | 39.60 |
| B1 | wt% | 42.50 | | | |
| B2 | wt% | | 42.50 | | |
| B3 | wt% | | | 42.50 | |
| b4 | wt% | | | | 42.50 |
| C | wt% | 17.90 | 17.90 | 17.90 | 17.90 |
| Evaluation | | | | | |
| Thermal conductivity | Surface (W/m·k) | 0.70 | 0.69 | 0.69 | 0.64 |
| | Depth (W/m·k) | 0.69 | 0.67 | 0.68 | 0.65 |

The blending ratios of the blending components in Table 1 to 3 represent parts by mass, and the following were used.

- PAS resin component
  A1: Polyphenylene sulfide resin (V6 melt viscosity 10 Pa s)
- Magnesium carbonate

B1: Magnesium carbonate "Magnesite Fine Powder" manufactured by Sobueclay Co., Ltd. was filtered under pressure using a 120-mesh filter (trapped particle size greater than 125 μm) to remove trapped particles to

obtain particles ($D_{50}$ = 17.9 μm, circularity 0.68)

B2: Magnesium carbonate "Magnesite" manufactured by Sobueclay Co., Ltd. was filtered under pressure using a 50-mesh filter (trapped particle size greater than 297 μm) to remove trapped particles to obtain particles ($D_{50}$ = 27.9 μm, circularity 0.66)

B3: Magnesium carbonate "Magnesite" manufactured by Sobueclay Co., Ltd. was filtered under pressure using a 400-mesh filter (trapped particle size greater than 37 μm) to recover trapped particles ($D_{50}$ = 43.6 μm, circularity 0.65).

b4: Magnesium carbonate "Magthermo MS-PS" manufactured by Konoshima Chemical Co., Ltd. ($D_{50}$ = 10.6 μm, circularity 0.83, maximum particle size 44 μm)

- Filler component
  C: Glass fiber, "FT-562" manufactured by Owens Corning Corporation

The Examples were excellent in thermal conductivity in the surface direction and the thickness (depth) direction as compared with the Comparative Examples.

## Claims

1. A polyarylene sulfide resin composition formed by blending a polyarylene sulfide resin and magnesium carbonate having a circularity of less than 0.8 as essential components.

2. The polyarylene sulfide resin composition according to claim 1, wherein the magnesium carbonate has an average particle size ($D_{50}$) of 45 μm or less.

3. The polyarylene sulfide resin composition according to claim 1 or 2, wherein the magnesium carbonate has a particle size of 300 μm or less.

4. The polyarylene sulfide resin composition according to any one of claims 1 to 3, wherein the magnesium carbonate is in a range of 20 to 400 parts by mass with respect to 100 parts by mass of the polyarylene sulfide resin.

5. The polyarylene sulfide resin composition according to any one of claims 1 to 4, which is used for thermally conductive materials.

6. A molded article formed by molding the polyarylene sulfide resin composition according to any one of claims 1 to 5.

7. The molded article according to claim 6, wherein the molded article has a thermal conductivity in a surface direction of the molded article (measured by a hot disk method) of 0.65 [W/m K] or more, and a thermal conductivity in a thickness direction (measured by a xenon flash method) of 0.65 [W/m·K] or more.

8. A method for producing a polyarylene sulfide resin composition including a step of blending a polyarylene sulfide resin and magnesium carbonate having a circularity of less than 0.8 as essential components and melt-kneading the polyarylene sulfide resin and the magnesium carbonate in a temperature range equal to or higher than a melting point of the polyarylene sulfide resin.

9. The method for producing a polyarylene sulfide resin composition according to claim 8, wherein the magnesium carbonate has an average particle size ($D_{50}$) of 45 μm or less.

10. The method for producing a polyarylene sulfide resin composition according to claim 8 or 9, wherein the magnesium carbonate has a particle size of 300 μm or less.

11. The method for producing a polyarylene sulfide resin composition according to any one of claims 8 to 10, including a step of sieving the magnesium carbonate with a filter having an opening of 297 μm.

12. The method for producing a polyarylene sulfide resin composition according to any one of claims 8 to 11, including a step of crushing the magnesium carbonate.

13. A method for producing a molded article, including a step of melt-molding the polyarylene sulfide resin composition

according to any one of claims 1 to 5.

**INTERNATIONAL SEARCH REPORT**

International application No. PCT/JP2021/020109

A. CLASSIFICATION OF SUBJECT MATTER
C08L 81/02(2006.01)i; C08K 3/26(2006.01)i
FI: C08L81/02; C08K3/26
According to International Patent Classification (IPC) or to both national classification and IPC

B. FIELDS SEARCHED
Minimum documentation searched (classification system followed by classification symbols)
C08L1/00-101/14; C08K3/00-13/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2018-188506 A (KONOSHIMA CHEMICAL CO., LTD.) 29 November 2018 (2018-11-29) claims 1, 5, 7-8, 11, paragraphs [0024], [0044]-[0046], [0050], [0054], [0066], [0069], example 4 | 1-4, 6-7, 13<br>8-12<br>5 |
| X | CN 102993751 A (HESHAN LIDE ELECTRONIC INDUSTRY CO., LTD.) 27 March 2013 (2013-03-27) claims 1, 6, 8, paragraphs [0005], [0041]-[0046], example 2 | 1-13 |
| X | CN 102391647 A (SICHUAN SGRANT ELECTRONICS TECHNOLOGY CO., LTD.) 28 March 2012 (2012-03-28) claim 1, paragraphs [0010], [0038]-[0039], example 3 | 1-13 |
| Y<br>A | JP 2018-053004 A (DIC CORPORATION) 05 April 2018 (2018-04-05) claims 1, 4, paragraph [0047] | 8-12<br>1-7, 13 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 July 2021 (15.07.2021) | 27 July 2021 (27.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/020109

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-088984 A (TORAY INDUSTRIES, INC.) 23 May 2016 (2016-05-23) entire text | 1-13 |
| A | JP 2013-023609 A (TOSOH CORP.) 04 February 2013 (2013-02-04) entire text | 1-13 |
| A | JP 2004-059378 A (NITTETSU MINING CO., LTD.) 26 February 2004 (2004-02-26) entire text | 1-13 |

Form PCT/ISA/210 (continuation of second sheet) (January 2015)

**INTERNATIONAL SEARCH REPORT**
Information on patent family members

International application No.
PCT/JP2021/020109

| Patent Documents referred in the Report | Publication Date | Patent Family | Publication Date |
|---|---|---|---|
| JP 2018-188506 A | 29 Nov. 2018 | WO 2018/199153 A1 | |
| CN 102993751 A | 27 Mar. 2013 | (Family: none) | |
| CN 102391647 A | 28 Mar. 2012 | (Family: none) | |
| JP 2018-053004 A | 05 Apr. 2018 | (Family: none) | |
| JP 2016-088984 A | 23 May 2016 | (Family: none) | |
| JP 2013-02609 A | 04 Feb. 2013 | (Family: none) | |
| JP 2004-059378 A | 26 Feb. 2004 | US 2005/0129606 A1 entire text<br>WO 2003/068681 A1<br>EP 1475351 A1<br>CN 1646430 A<br>KR 10-0961298 B1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014234407 A
- JP 2018053004 A
- JP 2016088984 A
- JP 7228699 A
- WO 2010058713 A